# EUROPÄISCHE PATENTSCHRIFT

(11) **EP 1 747 938 B1**
(45) Veröffentlichungstag und Bekanntmachung des Hinweises auf die Patenterteilung: **08.10.2008**
(21) Anmeldenummer: 06015204.8
(22) Anmeldetag: 21.07.2006
(51) Int. Cl.: B60R 1/072

(54) **Elektrisch verstellbarer Rückspiegel**
Electrically adjustable rearview mirror
Rétroviseur réglable électriquement

(30) Priorität: 26.07.2005 DE 202005011687 U
(43) Veröffentlichungstag der Anmeldung: 31.01.2007
(73) Patentinhaber: Laudenbach, Katharina, 78559 Gosheim (DE)
(72) Erfinder: Laudenbach, Franz, 78559 Gosheim (DE)
(74) Vertreter: Neymeyer, Franz

(56) Entgegenhaltungen:
- DE-A1- 2 836 749
- US-A- 4 114 988
- US-A- 4 444 466
- PATENT ABSTRACTS OF JAPAN Bd. 004, Nr. 023 (M-093), 26. Februar 1980 (1980-02-26) & JP 54 162344 A (KOITO MFG CO LTD), 22. Dezember 1979 (1979-12-22)

## Beschreibung

Die Erfindung betrifft einen Rückspiegel für Kraftfahrzeuge mit einem elektromotorischen Verstellantrieb, der zwei Elektromotoren umfaßt, die in einem Spiegelgehäuse angeordnet sind und über Untersetzungsgetriebe einen mittels eines Kugelgelenkes im Spiegelgehäuse schwenkbar gelagerten Spiegelträger in zwei um einen Winkelversatz (α) von vorzugsweise 90° zueinander versetzten Schwenkebenen zur Ausführung von Schwenkbewegungen antreiben.

Aus AT 405 501 B ist bereits ein Rückspiegel, insbesondere Außenspiegel für ein Kraftfahrzeug bekannt, bei dem zwei kugelabschnittförmige Schalengehäuse ineinander geführt sind, wobei das innere Schalengehäuse mit zwei Stellmotoren versehen ist, die über mehrere Getriebeübersetzungen mit rechtwinklig zueinander angeordneten Zahnrädern in Eingriff stehen, die ihrerseits mit Verzahnungen kämmen, die jeweils an der Innenseite des äußeren Schalenkörpers ebenfalls um 90° zueinander versetzt angeordnet sind. Dabei ist die innere Kugelabschnittschale feststehend angeordnet und die äußere Kugelabschnittschale relativ zu der inneren schwenkbeweglich um den gemeinsamen Kugelmittelpunkt in zwei Richtungen verschwenkbar. Die äußere verschwenkbare Kugelabschnittschale ist mit einem Spiegelträger versehen, auf dem die eigentliche Rückspiegelscheibe befestigt ist.

Dokument US 4,114,988 beschreibt auch einen solchen verstellbaren Rückspiegel mit zwei Motoren und ihre Getriebeübersetzungen.

Durch die bei diesen Rückspiegeln mehrfach erforderlichen Getriebeuntersetzungen, die in Form von Schnecken und Schneckenrädern realisiert sind, wird der Aufbau und insbesondere die Montage der vielen Einzelteile sehr aufwändig und somit auch kostenträchtig.

Der Erfindung liegt die Aufgabe zugrunde, einen Rückspiegel der eingangs genannten Art zu schaffen, der aus möglichst wenig Einzelteilen besteht, die einfach und kostengünstig herstellbar sowie leicht montierbar sind.

Gelöst wird diese Aufgabe erfindungsgemäß dadurch, dass der Spiegelträger mittels einer Gelenkkugel in einer Kugelgelenkschale gelagert ist und dass die Gelenkkugel einen in den Gehäuseinnenraum ragenden Stellarm aufweist, der mit zwei um den Winkelversatz gegeneinander versetzte Gewindespindeln über kugelgelenkartig in ihm gelagerte Muttergewinde in Eingriff steht, wobei jede Gewindespindel von einem Getriebemotor angetrieben ist.

Durch die erfindungsgemäße Ausgestaltung können zwei handelsübliche Getriebemotoren, die sehr kostengünstig auf dem Markt erhältlich sind, eingesetzt werden. Außerdem kann durch die Gewindespindeln eine zusätzliche hohe Untersetzung mit einfachsten und kostengünstig herstellbaren Getriebeteilen erreicht werden. Im übrigen besteht dieser Rückspiegel aus einem Minimum an Einzelteilen, die nicht nur einfach herstellbar sondern auch leicht montierbar sind.

Der Winkelversatz, um den die Gewindespindeln mit ihren Elektromotoren versetzt sind, muß nicht unbedingt 90° betragen. Er kann größer oder kleiner sein. Bei 90° jedoch sind Verstellbedingungen am günstigsten.

Von fertigungstechnischem Vorteil ist auch die Ausgestaltung nach Anspruch 2.

Damit die Gewindespindeln der beiden Elektromotoren den jeweiligen Schwenkbewegungen des Stellarmes folgen können, ist die Ausgestaltung nach Anspruch 3 vorgesehen.

Die Verwendung von Schrittmotoren gemäß Anspruch 4 erleichtert die elektrische bzw. elektronische Steuerung. Außerdem sind solche Schrittmotoren auf dem Markt sehr kostengünstig zu haben.

Durch die Ausgestaltung nach Anspruch 5 wird eine konstruktiv einfache Anordnung ermöglicht.

Durch die Ausgestaltung nach Anspruch 6 lassen sich die beiden Elektromotoren auf einfache Weise schwenkbar im Spiegelgehäuse lagern.

Dabei wird durch die Ausgestaltung nach Anspruch 7 eine sehr einfache Verdrehsicherung erzielt, die sicherstellt, dass sich die Motoren selbst nicht drehen können, wenn sie aktiviert werden, ihre Schwenkbarkeit wird jedoch dadurch nicht eingeschränkt.

Durch den gemäß Anspruch 8 vorgesehenen konischen Rand, mit dem die Kugelpfanne jeweils ausgerüstet ist, läßt sich ein relativ großer Schwenkwinkel erreichen.

Einen großen Schwenkwinkel und eine verdrehsichere Lagerung der die Muttergewinde aufweisenden Kugelkörper, die im Stellarm gelagert sind, erreicht man auch durch die Ausgestaltung gemäß Anspruch 9 in Verbindung mit Anspruch 10 und 11.

Durch die Ausgestaltung nach Anspruch 12 ist die Möglichkeit gegeben, die beiden Kugelkörper mit ihren Muttergewinden für die Gewindespindeln in ein und demselben Stellarm unterzubringen, was fertigungstechnisch und auch bezüglich des Raumbedarfs von erheblichem Vorteil ist.

Mit der Ausgestaltung nach Anspruch 13 erreicht man jeweils gleiche Winkelausschläge der Gewindespindeln bei gleich großen Schwenkbewegungen des Stellarms aus seiner Mittellage.

Durch die Ausgestaltung nach Anspruch 14 wird ebenfalls ein relativ großer Schwenkwinkel des Stellarms und somit auch des Spiegelträgers ermöglicht.

Durch die nach Anspruch 15 vorgesehenen Spreizschlitze läßt sich die Gelenkkugel des Stellarms leicht in die Kugelgelenkschale einsetzen und trotzdem eine gute, spielfreie Lagerung gewährleisten.

Weitere vorteilhafte Ausgestaltungen der Erfindung sind Gegenstand der Ansprüche 16 bis 22.

Anhand der Zeichnungsfiguren wird im folgenden ein Ausführungsbeispiel der Erfindung näher erläutert. Es zeigt:
- Fig. 1: in schematischer teilweise geschnittener 3D-Darstellung ein halbkugelförmiges Spiegelgehäuse mit montiertem Stellarm und Spiegelträger;
- Fig. 2: denselben Gegenstand wie Fig. 1 in anderer, ebenfalls schematischer, teilweise geschnittener 3D-Ansicht;
- Fig. 3: den Spiegelträger mit dem Spiegelgehäuse im Schnitt III-III aus Fig. 4;
- Fig. 3a: dieselbe Darstellung wie Fig. 3, lediglich mit einem kugelabschnittförmigen Spiegelgehäuse;
- Fig. 4: das leere Spiegelgehäuse der Fig. 3 in Draufsicht;
- Fig. 4a: das Spiegelgehäuse aus Fig. 3a in Draufsicht;
- Fig. 5: das Spiegelgehäuse der Fig. 3 ohne Spiegelträger und Stellmotoren;
- Fig. 5a: das leere Spiegelgehäuse der Fig. 3a ohne Spiegelträger und Stellmotoren;
- Fig. 6: den Spiegelträger als Einzelteil in geschnittener Darstellung;
- Fig. 7: in vergrößerter Darstellung eine Kugelpfanne im Schnitt;
- Fig. 8: die Kugelpfanne der Fig. 7 mit eingesetztem, topfartigen Halter für den Elektromotor in Mittelstellung;
- Fig. 9: die gleichen Teile wie Fig. 8, lediglich mit verschwenktem Halter;
- Fig. 10: einen Elektromotor mit integriertem Getriebe und Gewindespindel in Seitenansicht;
- Fig. 11: einen Halter für den Elektromotor der Fig. 10 teilweise geschnitten;
- Fig. 12: den Stellarm in einer Seitenansicht;
- Fig. 13: einen Schnitt XIII-XIII aus Fig. 12;
- Fig. 14: den Stellarm in einer gegenüber der Fig. 12 um 90° verdrehten Seitenansicht;
- Fig. 15: einen Schnitt XV-XV aus Fig. 14;
- Fig. 16: in vergrößerter Darstellung einen Kugelkörper mit Muttergewinde in Stirnansicht;
- Fig. 17: einen Schnitt XVII-XVII aus Fig. 16;
- Fig. 18: den Kugelkörper der Fig. 16 und 17 im Maßstab der Fig. 12 bis 15.

In den Zeichnungen ist der erfindungsgemäße Rückspiegel ohne die eigentliche Spiegelscheibe dargestellt, die normalerweise stirnseitig auf dem schwenkbeweglichen Spiegelträger in geeigneter Weise befestigt ist.

Der hier dargestellte Rückspiegel 1 besteht im wesentlichen aus einem Spiegelträger 2 und einem Spiegelgehäuse 3, in dem zwei Elektromotoren 4 und 5 untergebracht sind, die zur Verstellung der jeweiligen Schwenklage des Spiegelträgers 2 dienen.

Der Spiegelträger 2 besteht aus einer runden Platte 6 mit einem unterseitig angeordneten umlaufenden Verstärkungsrand 7. Die geometrische Form des Spiegelträgers kann beliebig gewählt und der jeweils zu verwendeten Spiegelscheibe angepaßt sein.

Im vorliegenden Fall ist der Einfachheit halber eine runde Spiegelträgerform dargestellt. In der Mitte dieser runden Platte 6 ist unterseitig über einen kurzen zylindrischen Hals 8 eine Gelenkkugel 9 angeordnet, die starr mit der Platte 6 des Spiegelträgers 2 verbunden ist. Auf der dem Hals 8 diametral gegenüberliegenden Unterseite ist die Gelenkkugel 9 mit einem radialen Stellarm 10 versehen, der in das Spiegelgehäuse hineinragt und mit dem die beiden Elektromotoren 4 und 5 getrieblich in Verbindung stehen.

Die Gelenkkugel 9 ist nach allen Richtungen schwenkbar in einer Kugelgelenkschale 11 gelagert, die vorzugsweise einstückiger Bestandteil des Spiegelgehäuses 3 ist. Das Spiegelgehäuse 3 hat die Form eines halbkugelförmigen Schalenkörpers 3', dessen Oberseite mit einem kreisförmigen Rand 12 versehen ist. Die Kugelgelenkschale 11 ist im Zentrum des halbkugelförmigen Schalenkörpers 3' des Spiegelgehäuses 3 angeordnet und durch zwei sich diametral gegenüberliegende radiale Stege 13 und 14 mit dem Schalenkörper 3' verbunden.

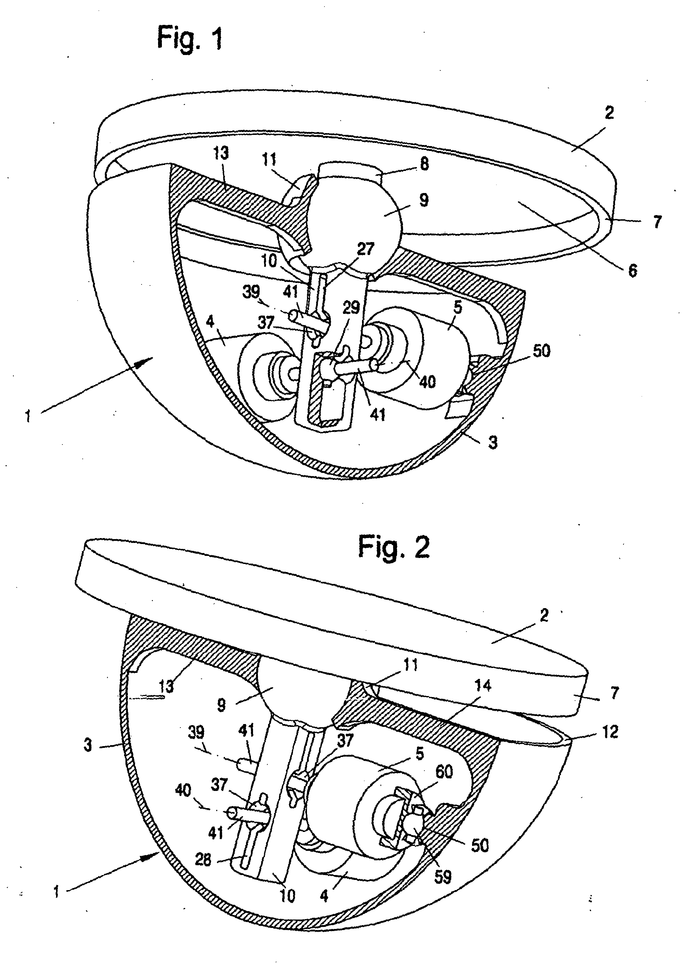

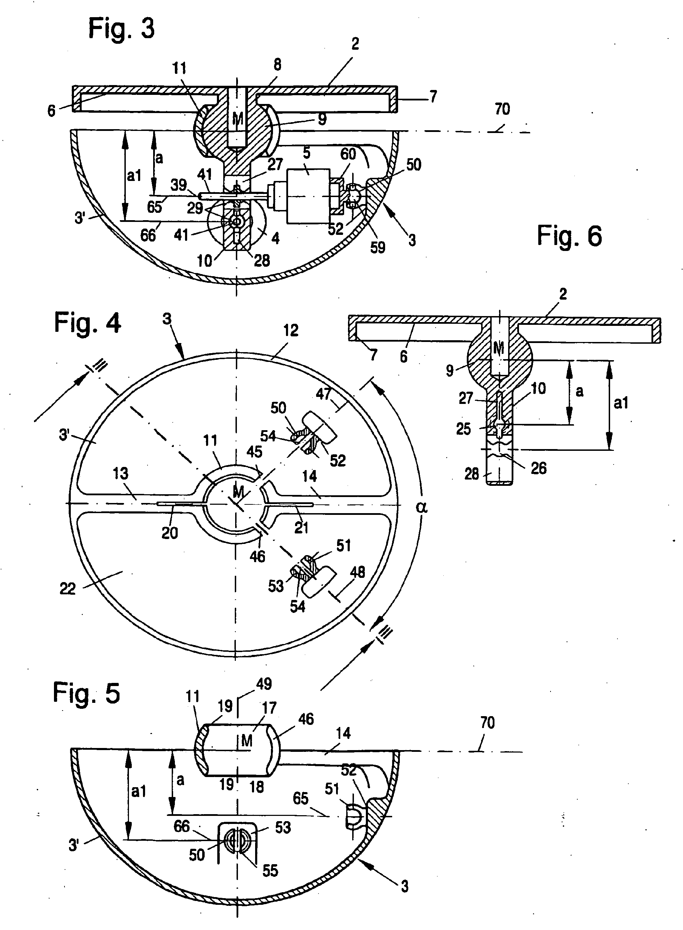

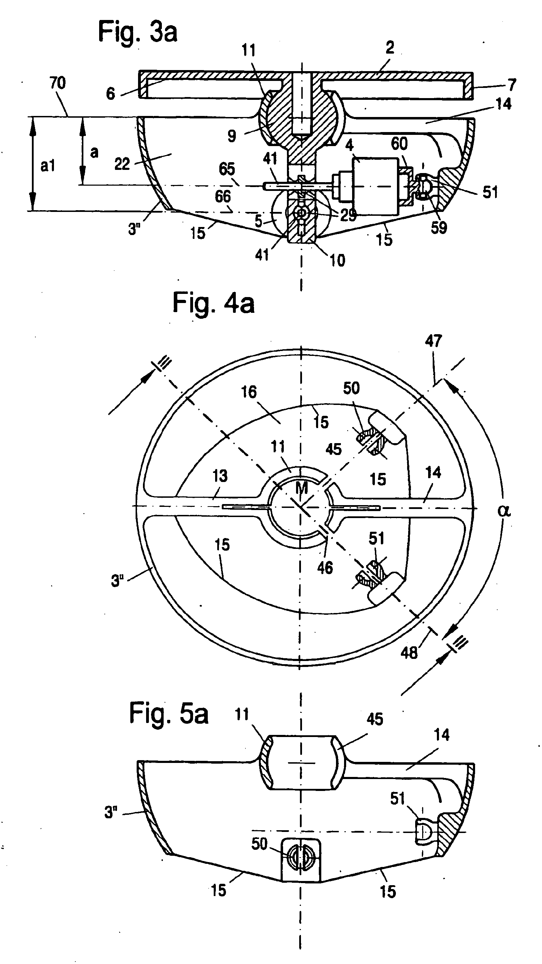

In den Fig. 1 bis 5 ist das Spiegelgehäuse 3 jeweils als geschlossener Schalenkörper 3' dargestellt. In der Praxis wird man diesen Schalenkörper vorzugsweise nicht als geschlossene halbkugelförmige Schalenform herstellen, sondern als kugelabschnittförmigen Schalenkörper 3" ausbilden, wie er beispielsweise in den Fig. 3a, 4a und 5a dargestellt ist. Dort hat der Schalenkörper 3" die Form eines unterseitig offenen, von den Rändern 15 einer Ausnehmung 16 begrenzte Form eines Kugelschalenabschnitts.

Die Form dieser Ausnehmung 16 und ggf. weiterer Ausnehmungen richtet sich gewöhnlich nach dem Herstellungsverfahren. Vorzugsweise wird man sowohl das Spiegelgehäuse als auch den Spiegelträger mit der Gelenkkugel und dem Stellarm im Spritzgußverfahren aus formstabilem Kunststoff herstellen.

Auch das Material, aus dem der Spiegelträger 2 mit der einstückig angeformten Gelenkkugel 9 besteht, ist Kunststoff, so dass sich der Spiegelträger 2, die Gelenkkugel 9 und der Stellarm 10 einstückig herstellen lassen.

Die von den beiden Radialstegen 13 und 14 getragene Kugelgelenkschale 11 befindet sich mit ihrem Kugelmittelpunkt **M** im Kugelzentrum des Spiegelgehäuses 3, zu welchem die Gehäuseschale 3' bzw. die Gehäuseschalenabschnitte 3" konzentrisch verlaufen. Um der Gelenkkugel 9 in der Kugelgelenkschale die Möglichkeit zu geben, Schwenkbewegungen auszuführen, ist die Kugelgelenkschale 11 oben und unten jeweils mit einer Öffnung 17 bzw. 18 versehen. Diese Öffnungen 17 und 18 haben jeweils größere Durchmesser als der Hals 8 und das obere Ende des Stellarms 10 und sie weisen jeweils einen konischen Rand 19 auf, durch welchen der maximale Schwenkwinkel der Gelenkkugel 9 mit ihrem Hals 8 bzw. Stellarm 10 eine ausreichende Größe erhält.

Um die Gelenkkugel 9 relativ leicht in die Kugelgelenkschale 11 einführen zu können, ist die Kugelgelenkschale durch zwei in den Radialstegen 13 und 14 angeordnete Spreizschlitze 20 und 21 gespalten, so dass die durch diese beiden Spreizschlitze 20 und 21 getrennten Schalenteile sich radial dehnen können, wenn die Gelenkkugel 9 rastend in den Schalenkörper 11 eingeführt bzw. eingeschnappt wird um darin einen spielfreien Sitz zu erhalten.

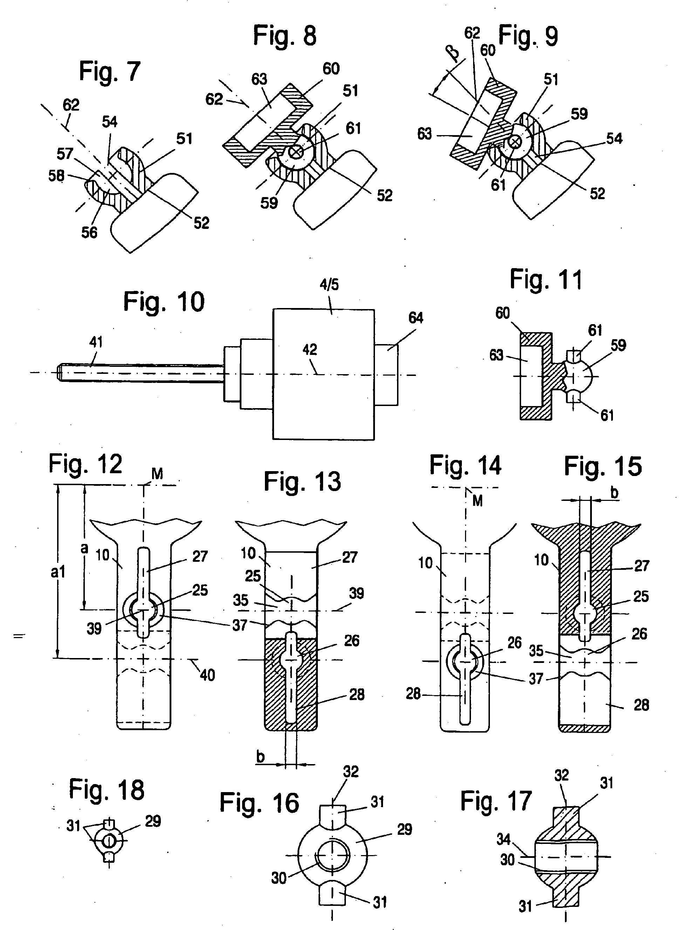

Der in Fig. 12 bis 15 als Einzelteil dargestellte Stellarm 10, der eine vorzugsweise im wesentlichen quadratische Querschnittsform aufweist, ist mit zwei in radialer Richtung übereinander liegenden Kugelpfannen 25 und 26 versehen, die jeweils durch schmale Führungsschlitze 27 bzw. 28 gespalten sind. In diesen Kugelpfannen 25 und 26 sind jeweils Kugelkörper 29 (Fig. 16 bis 18) spielfrei, jedoch schwenkbeweglich eingesetzt (eingeschnappt), die mit einem diametral verlaufenden Muttergewinde 30 versehen sind. Außerdem sind diese Kugelkörper 29 jeweils mit zwei sich diametral gegenüberliegenden zylindrischen Radialzapfen 31 versehen, deren gemeinsame Achse 32 rechtwinklig zur Achse 34 des Muttergewindes 30 verläuft. Die Dicke dieser Radialzapfen 31 ist so auf die Breite b der Führungsschlitze 27 und 28 abgestimmt, dass sie in diesen Führungsschlitzen 27, 28 eine nahezu spielfreie seitliche Führung erhalten, wenn die Kugelkörper 29 in die Kugelpfannen 25 bzw. 26 des Stellarms 10 eingesetzt sind. Die Kugelpfannen 25 und 26 sind jeweils mit sich diametral gegenüberliegenden Öffnungen 35 und 36 versehen, die jeweils konische Ränder 37 und 38 aufweisen.

Wie aus den Fig. 12 bis 15 ersichtlich ist, sind die Führungsschlitze 27 und 28 sowie die Öffnungen 35 und 36 mit ihren konischen Rändern 37 und 38 im Stellarm 10 um den Winkelversatz α von vorzugsweise 90° zueinander versetzt angeordnet, so dass die Achsen 39 und 40 der Öffnungen 35 und 36 der oberen Kugelpfanne 25 und der unteren Kugelpfanne 26 rechtwinklig zueinander verlaufen. Durch die Öffnungen 35 und 36 können nicht nur jeweils die Kugelkörper 29 in die Kugelpfannen 25 und 26 rastend eingesetzt werden, sondern es besteht auch durch sie die Möglichkeit, die jeweils in eine Kugelpfanne eingesetzten Kugelkörper 29 in Eingriff zu bringen mit einer dazu passenden Gewindespindel 41 eines Elektromotors 4 bzw. 5.

Bei diesen Elektromotoren 4 und 5 handelt es sich um sog. Getriebemotoren, die mit einem integrierten Untersetzungsgetriebe versehen sind, auf deren Abtriebswelle die Gewindespindel 41 drehfest angeordnet ist und zwar koaxial zur Motorachse 42 bzw. der zu dieser Motorachse 42 koaxialen Motorwelle.

Weil diese Gewindespindeln 41 der beiden Elektromotoren 4 und 5 jeweils schon in die Kugelkörper 29 des Stellarms 10 eingeschraubt werden müssen, bevor bei einem geschlossenen Spiegelgehäuse die Gelenkkugel 9 in die Kugelgelenkschale 10 von oben her eingesetzt wird, ist es erforderlich, die Gelenkschale 11 an zwei in einem dem Winkelversatz α entsprechenden Winkelabstand um den die Achsen 39 und 40 im Stellarm gegeneinander versetzt sind, mit durchgehenden Radialschlitzen 45 und 46 zu versehen, durch welche die Gewindespindeln 41 der beiden Elektromotoren 4 und 5 leicht in den Gehäuseinnenraum 22 geführt werden können, so dass die beiden Motoren, die in den Fig. 1, 2 und 3 sowie 3a dargestellte Lage einnehmen können, wenn der Stellarm 10, wie dargestellt, in den Gehäuseinnenraum 22 hineinragt.

Bei einem, mit einer unterseitig offenen Gehäuseschale 3' versehenen Spiegelgehäuse 3, könnte die Gelenkkugel 9 unter der Voraussetzung von unten in die Kugelgelenkschale 11 eingeführt werden, dass der Spiegelträger 2 nicht, wie dargestellt, einstückig mit der Gelenkkugel 9 verbunden ist, sondern als separates Teil nachträglich auf den Hals 8 der Gelenkkugel, beispielsweise mittels Schrauben, aufgesetzt und befestigt werden kann.

In einem solchen Fall kann auf die Radialschlitze 45 und 46 verzichtet werden.

Aus den Fig. 4 und 4a ist ersichtlich, dass die Radialstege 13 und 14, welche die Kugelgelenkschale 11 tragen, jeweils zwischen den Radialschlitzen 45 und 46 angeordnet sind, so dass diese Radialstege 13 und 14 das Einführen der Elektromotoren in den Gehäuseinnenraum 22 der geschlossenen Gehäuseschale 3' nicht behindern.

In den um den Winkelversatz α gegeneinander versetzten Radialebenen 47 und 48, in denen die Radialschlitze 45 und 46 der Kugelgelenkschale 11 angeordnet sind, befinden sich an der Innenseite der Gehäuseschale 3' bzw. 3" Kugelpfannen 50 und 51, die in parallel zur Gehäusemittelachse 49 verlaufenden Sockelflächen 52 bzw. 53 angeordnet sind. Diese Kugelpfannen 50 und 51 sind jeweils mit radialen Führungsschlitzen 54 bzw. 55 versehen, die sie in zwei Hälften spalten. In den Fig. 7, 8 und 9 ist eine Kugelpfanne 51 aus der Fig. 4 in vergrößertem Maßstab dargestellt. Der kugelförmige Hohlraum 56 ist stirnseitig mit einer Einstecköffnung 57 versehen, an die sich ein konischer Rand 58 anschließt. Diese Kugelpfannen 50 und 51 sind völlig gleich ausgebildet. Sie dienen zur Aufnahme des Kugelkopfes 59 eines topfartig ausgebildeten zylindrischen Motorhalters 60, der wie der Kugelkopf 29 mit zwei sich diametral gegenüberliegenden koaxialen, zylindrischen Radialzapfen 61 versehen ist.

Diese Radialzapfen liegen, wenn der Kugelkopf 59 in die Kugelpfanne 50 bzw. 51 eingesetzt ist, in einem der Führungsschlitze 54 bzw. 55 und sie bewirken, dass der Motorhalter 60 zwar nach allen Richtungen schwenkbar, jedoch nicht um die Motorachse 39, 40 drehbar ist. In Fig. 9 ist dargestellt, dass sich der Motorhalter 60 relativ zur Mittelachse 62 der Kugelpfanne 51 um einen Winkel β nach allen Seiten schwenken läßt. Dieser Winkel β ist ausreichend groß, wenn er etwa zwischen 15° und 20° liegt.

Wie aus den Fig. 5 und 6 ersichtlich ist, sind die die Kugelköpfe 59 der Motorhalter 60 aufnehmenden Kugelpfannen 50 und 51 in Ebenen 65 und 66 angeordnet, deren radiale Abstände **a** und **a1** vom Mittelpunkt **M** des von der Gelenkkugel 9 und der Kugelgelenkschale 11 gebildeten Kugelgelenkes den radialen Abständen **a** und **a1** der Kugelpfannen 25 und 26 des Stellarms 10 entsprechen. Damit ist sichergestellt, dass die beiden Gewindespindeln 41 der Elektromotoren 4 und 5 in der radialen Mittellage des Stellarms 10, wenn dessen Achse 49 zur Randebene 70 des Spiegelgehäuses 3 eine rechtwinklige Lage einnimmt, ebenfalls rechtwinklig zur Achse 49 des Stellarms 10 verlaufen. Somit ist sichergestellt, dass der Stellarm 10 nach allen Richtungen gleich weit verschwenkt werden kann.

Der mit einem zylindrischen, taschenartigen Hohlraum 63 versehene Motorhalter 60 dient zur drehfesten Aufnahme eines zylindrischen Ansatzes 64 des Elektromotors 4 bzw. 5. Somit ist der Elektromotor 4 bzw. 5 mit Hilfe des topfartigen Motorhalters 60 und seines koaxialen Kugelkopfes 59 ortsfest an der Innenseite des Spiegelgehäuses 3 jedoch schwenkbar gelagert, so dass er beim Verstellen des Stellarms 10, mit dem die Gewindespindel 41 in Eingriff steht, diesem folgen kann.

Durch die Verwendung von Schrittmotoren 4 und 5 mit integriertem Untersetzungsgetriebe ist deren Raumbedarf auf ein Minimum reduziert. Außerdem haben Schrittmotoren den Vorteil, dass sie sich elektronisch auch mit Memorymodus sehr einfach steuern lassen.

Grundsätzlich besteht auch die Möglichkeit, die beiden Elektromotoren 4 und 5 im Spiegelgehäuse starr zu lagern und zwischen den Abtriebswellen der Motorengetiebe und den Gewindespindeln 41 jeweils eine Gelenkkupplung, z. B. in Form eines Taumelgelenks oder einer elastischen Kupplung vorzusehen.

## Patentansprüche

1. Rückspiegel für Kraftfahrzeuge mit einem elektromotorischen Verstellantrieb, der zwei Elektromotoren umfaßt, die in einem Spiegelgehäuse angeordnet sind und über Untersetzungsgetriebe einen mittels eines Kegelgelenkes im Spiegelgehäuse schwenkbar gelagerten Spiegelträger in zwei um einen Winkelversatz (α) von vorzugsweise 90° zueinander versetzten Schwenkebenen zur Ausführung von Schwenkbewegungen antreiben,
**dadurch gekennzeichnet,**
**dass** der Spiegelträger mittels einer Gelenkkugel (9) in einer Kugelgelenkschale (11) gelagert ist und dass die Gelenkkugel (9) einen in den Gehäuseinnenraum (22) ragenden Stellarm (10) aufweist, der mit zwei um den Winkelversatz gegeneinander versetzte Gewindespindeln über kugelgelenkartig in ihm gelagerte Muttergewinde in Eingriff steht, wobei jede Gewindespindel von einem Getriebemotor angetrieben ist.

2. Rückspiegel nach Anspruch 1, **dadurch gekennzeichnet, dass** das Spiegelgehäuse (3) wenigstens teilweise die Schalenform einer Halbkugel (Fig. 1 bis 5) oder eines Kugelabschnitts (Fig. 3a bis 5a) aufweist und die Kugelgelenkschale (11) im Kugelzentrum (**M**) des Spiegelgehäuses (3) von einem oder mehreren Radialstegen (13, 14) getragen ist.

3. Rückspiegel nach Anspruch 2, **dadurch gekennzeichnet, dass** die Kugelgelenkschale von zwei sich diametral gegenüberliegenden Radialstegen (13, 14) getragen ist.

4. Rückspiegel nach einem der Ansprüche 1, 2 oder 3, **dadurch gekennzeichnet, dass** die beiden Elektromotoren mittels Kardan- oder Kugelgelenken undrehbar an der Innenseite des Spiegelgehäuses (3) schwenkbar so gelagert sind, dass bei mittig-radialer Stellung des Stellarms die Achsen der Gewindespindeln jeweils zumindest annähernd rechtwinklig zu dessen Achse verlaufen.

5. Rückspiegel nach Anspruch 1 oder 4, **dadurch gekennzeichnet, dass** die Elektromotoren Schrittmotoren sind.

6. Rückspiegel nach Anspruch 4 oder 5, **dadurch gekennzeichnet, dass** die Gewindespindeln (41) jeweils koaxial zu den Motorachsen (42) verlaufen und auf den Abtriebswellen eines integrierten Untersetzungsgetriebes befestigt sind.

7. Rückspiegel nach Anspruch 1, **dadurch gekennzeichnet, dass** die Elektromotoren (4, 5) jeweils mittels eines flansch- oder topfartigen Motorhalters (60), der mit einem koaxialen Kugelkopf (59) als Lagerelement versehen ist, in einer ortsfest an der Innenseite des Spiegelgehäuses (3) angeordneten Kugelpfanne (50, 51) gelagert sind.

8. Rückspiegel nach Anspruch 7, **dadurch gekennzeichnet, dass** der Kugelkopf (59) als Verdrehsicherung wenigstens einen Radialzapfen (61, 62) aufweist, der in einem Führungsschlitz (54, 55) der mit einer Einstecköffnung versehenen Kugelpfanne geführt ist.

9. Rückspiegel nach Anspruch 7 oder 8, **dadurch gekennzeichnet, dass** die Kugelpfanne (50, 51) im Bereich ihrer Einstecköffnung einen konischen Rand (58) aufweist.

10. Rückspiegel nach Anspruch 1 oder 6, **dadurch gekennzeichnet, dass** die Muttergewinde (30), mit denen die Gewindespindel (41) in Eingriff stehen, in mit Radialzapfen (31) versehenen Kugelkörpern (29) angeordnet sind, welche schwenkbeweglich, jedoch undrehbar im Stellarm (10) gelagert sind.

11. Rückspiegel nach Anspruch 10, **dadurch gekennzeichnet, dass** der Stellarm (10) zur schwenkbaren Aufnahme der Kugelkörper (29) mit in Richtung der Gewindespindeln (41) jeweils beidseitig Öffnungen aufweisenden Kugelpfannen (25, 26) versehen ist, die jeweils mit Führungsschlitzen (27, 28) für die Radialzapfen (31) der Kugelkörper (29) versehen sind.

12. Rückspiegel nach Anspruch 11, **dadurch gekennzeichnet, dass** die Öffnungen (35, 36) der Kugelpfannen (25, 26) jeweils mit konischen Rändern (37, 38) versehen sind.

13. Rückspiegel nach Anspruch 11 oder 12, **dadurch gekennzeichnet, dass** die Kugelpfannen (25, 26) radial zueinander versetzt im Stellarm (10) angeordnet sind.

14. Rückspiegel nach Anspruch 13, **dadurch gekennzeichnet, dass** die die Kugelköpfe (59) der Motorhalter (60) aufnehmenden Kugelpfannen (50, 51) in Ebenen (65, 66) angeordnet sind, deren radiale Abstände (a, a1) vom Mittelpunkt (M) des Kugelgelenks (9, 11) den radialen Abständen der Kugelpfannen (25, 26) im Stellarm (10) entsprechen.

15. Rückspiegel nach Anspruch 1, **dadurch gekennzeichnet, dass** die Kugelgelenkschale (11) auf der Spiegelseite und auf der Gehäuseinnenseite jeweils eine Öffnung (17, 18) mit einem konischen Rand (19) aufweist.

16. Rückspiegel nach Anspruch 1 oder 15, **dadurch gekennzeichnet, dass** die Kugelgelenkschale (11) durch zwei in den Radialebenen (47, 48) der beiden Kugelpfannen (50, 51), in denen die Elektromotoren (4, 5) gelagert sind, liegende Radialschlitze (45, 46), unterbrochen ist.

17. Rückspiegel nach Anspruch 14, **dadurch gekennzeichnet, dass** die Kugelgelenkschale (11) im Bereich wenigstens eines sie tragenden Radialsteges (13, 14) mit radialen Spreizschlitzen (20, 21) versehen ist.

18. Rückspiegel nach Anspruch 2 oder 16, **dadurch gekennzeichnet, dass** die die Kugelgelenkschale (11) tragenden Radialstege (13, 14) zwischen den Radialschlitzen (45, 46) angeordnet sind.

19. Rückspiegel nach einem der Ansprüche 1 bis 18, **dadurch gekennzeichnet, dass** das Spiegelgehäuse (3) und der Spiegelträger (2) aus formstabilem Kunststoff bestehen.

20. Rückspiegel nach einem der Ansprüche 1 bis 19, **dadurch gekennzeichnet, dass** die Kugelkörper (29) mit ihren Radialzapfen (31) jeweils einstückig aus Kunststoff bestehen.

21. Rückspiegel nach Anspruch 2 oder 3, **dadurch gekennzeichnet, dass** das Spiegelgehäuse (3) in seinem Schalenkörper Unterbrechungen, Ausnehmungen (16) und/oder Durchbrüche aufweist.

22. Rückspiegel nach einem der Ansprüche 1 bis 3, **dadurch gekennzeichnet, dass** die Gewindespindeln (41) mit den Abtriebswellen der Elektromotoren bzw. deren Untersetzungsgetriebe über Gelenkkupplungen in Verbindung stehen.

## Claims

1. Rearview mirror for motor vehicles with an electric motor adjustable drive, which comprises two electric motors, which are arranged in a mirror housing and via reduction gear mechanisms drive a mirror support mounted pivotably by means of a ball joint in the mirror housing in two pivotal planes offset relative to one another by an angle displacement (α) of preferably 90° to perform pivoting movements, **characterised in that** the mirror support is mounted by means of a joint ball (9) in a ball joint shell (11), and **in that** the joint ball (9) has an adjusting arm (10) projecting into the interior of the housing (22), which adjusting arm is in engagement with two threaded spindles offset relative to one another by the angle displacement via nut threads mounted in a ball-joint-like manner therein, wherein each threaded spindle is driven by a geared motor.

2. Rearview mirror according to claim 1, **characterised in that** the mirror housing (3) has at least partly the shell form of a hemisphere (Figs. 1 to 5) or a ball section (Figs. 3a to 5a) and the ball joint shell (11) is supported in the ball centre (M) of the mirror housing (3) by one or more radial webs (13, 14).

3. Rearview mirror according to claim 2, **characterised in that** the ball joint shell is supported by two diametrically opposite radial webs (13, 14).

4. Rear view mirror according to one of claims 1, 2, or 3, **characterised in that** the two electric motors are mounted pivotably by means of Cardan or ball joints non-rotatably on the inside of the mirror housing (3), so that in a central-radial position of the adjusting arm the axes of the threaded spindles run at least almost at right angles to its axis.

5. Rearview mirror according to claim 1 or 4, **characterised in that** the electric motors are stepping motors.

6. Rearview mirror according to claim 4 or 5, **characterised in that** the threaded spindles (41) run respectively coaxially to the motor axes (42) and are secured onto the drive shafts of an integrated reduction gear.

7. Rearview mirror according to claim 1, **characterised in that** the electric motors (4, 5) are mounted respectively by means of a flange or pot-like motor holder (60), which is provided with an coaxial ball head (59) as a bearing element, in a ball cup (50, 51) fixed onto the inside of the mirror housing (3).

8. Rearview mirror according to claim 7, **characterised in that** the ball head (59) as anti-rotational means has at least one radial pin (61, 62), which is guided in a guiding slot (54, 55) of the ball cup provided with an insertion opening.

9. Rearview mirror according to claim 7 or 8, **characterised in that** the ball cup (50, 51) in the region of its insertion opening has a conical edge (58).

10. Rearview mirror according to claim 1 or 6, **characterised in that** the nut threads (30), with which the threaded spindles (41) are in engagement, are arranged in ball bodies (29) provided with radial pins (31), which ball bodies are mounted in a pivotably movable manner but non-rotatably in the adjusting arm (10).

11. Rearview mirror according to claim 10, **characterised in that** the adjusting arm (10) for the pivotable mounting of the ball body (29) is provided with ball cups (25, 26) having openings on both sides in the direction of the threaded spindles (41), which are provided respectively with guiding slots (27, 28) for the radial pins (31) of the ball bodies (29).

12. Rearview mirror according to claim 11, **characterised in that** the openings (35, 36) of the ball cups (25, 26) are provided respectively with conical edges (37, 38).

13. Rearview mirror according to claim 11 or 12, **characterised in that** the ball cups (25, 26) are arranged offset radially in relation to one another in the adjusting arm (10).

14. Rearview mirror according to claim 13, **characterised in that** the ball cups (50, 51) mounting the ball heads (59) of the motor holder (60) are arranged in planes (65, 66), the radial distances (a, a1) of which from the middle point (M) of the ball joint (9, 11) correspond to the radial distances of the ball cups (25, 26) in the adjusting arm (10).

15. Rearview mirror according to claim 1, **characterised in that** the ball joint shell (11) on the mirror side and on the housing inside respectively has an opening (17, 18) with a conical edge (19).

16. Rearview mirror according to claim 1 or 15, **characterised in that** the ball joint shell (11) is interrupted by two radial slots (45, 46) lying in the radial planes (47, 48) of the two ball cups (50, 51) in which the electric motors (4, 5) are mounted.

17. Rearview mirror according to claim 14, **characterised in that** the ball joint shells (11) are provided with radial spreading slots (20, 21) in the region of at least one radial web (13, 14) supporting the latter.

18. Rearview mirror according to claim 2 or 16, **characterised in that** the radial webs (13, 14) supporting the ball joint shell (11) are arranged between the radial slots (45, 46).

19. Rearview mirror according to one of claims 1 to 18, **characterised in that** the mirror housing (3) and the mirror support (2) are made of dimensionally stable plastic.

20. Rearview mirror according to one of claims 1 to 19, **characterised in that** the ball bodies (29) with their radial pins (31) are made respectively in one-piece from plastic.

21. Rearview mirror according to claim 2 or 3, **characterised in that** the mirror housing (3) in its shell body comprises interruptions, recesses (16) and/or openings.

22. Rearview mirror according to one of claims 1 to 3, **characterised in that** the threaded spindles (41) are connected with the drive shafts of the electric motors or their reduction gears via joint couplings.

## Revendications

1. Rétroviseur pour véhicules automobiles, équipé d'un entraînement de réglage à moteurs électriques englobant deux moteurs électriques qui sont logés dans un boîtier de miroir et mènent par l'intermédiaire d'engrenages démultiplicateurs, dans deux plans de pivotement décalés l'un de l'autre selon un décalage angulaire (α) mesurant de préférence 90°, en vue de l'exécution de mouvements pivotants, un porte-miroir monté à pivotement dans ledit boîtier de miroir, au moyen d'une articulation sphérique,
**caractérisé par le fait**
**que** le porte-miroir est monté dans une écuelle d'articulation sphérique (11), au moyen d'une rotule d'articulation (9) ; et par le fait que ladite rotule d'articulation (9) comporte un bras de réglage (10) qui s'engage dans l'espace interne (22) du boîtier et est en prise avec deux broches filetées décalées l'une de l'autre selon le décalage angulaire, par l'intermédiaire de filetages femelles intégrés dans ledit bras à la manière d'une articulation sphérique, chaque broche filetée étant entraînée par un moteur à engrenage.

2. Rétroviseur selon la revendication 1, **caractérisé par le fait que** le boîtier de miroir (3) revêt, au moins partiellement, la configuration en coque d'une demi-sphère (figures 1 à 5) ou d'un tronçon ou portion sphérique (figures 3a à 5a) et l'écuelle d'articulation sphérique (11) est portée, au centre (M) de la sphère dudit boîtier de miroir (3), par une ou plusieurs membrure(s) radiale(s) (13, 14).

3. Rétroviseur selon la revendication 2, **caractérisé par le fait que** l'écuelle d'articulation sphérique est portée par deux membrures radiales (13, 14) diamétralement opposées.

4. Rétroviseur selon l'une des revendications 1, 2 ou 3, **caractérisé par le fait que** les deux moteurs électriques sont montés à pivotement à la face intérieure du boîtier de miroir (3) au moyen d'articulations à la Cardan ou d'articulations sphériques, sans faculté de rotation, de façon telle que, lorsque le bras de réglage occupe une position radialement centrale, les axes des broches filetées s'étendent à chaque fois, au moins approximativement, à angle droit vis-à-vis de l'axe dudit bras.

5. Rétroviseur selon la revendication 1 ou 4, **caractérisé par le fait que** les moteurs électriques sont des moteurs pas à pas.

6. Rétroviseur selon la revendication 4 ou 5, **caractérisé par le fait que** les broches filetées (41) s'étendent, à chaque fois, coaxialement aux axes (42) des moteurs, et sont fixées sur les arbres de sortie d'un engrenage démultiplicateur intégré.

7. Rétroviseur selon la revendication 1, **caractérisé par le fait que** les moteurs électriques (4, 5) sont respectivement montés, au moyen d'une pièce de retenue (60) en forme de collerette ou de pot, munie d'une tête sphérique coaxiale (59) remplissant la fonction d'un élément de montage, dans une cuvette sphérique (50, 51) occupant une position fixe sur la face intérieure du boîtier de miroir (3).

8. Rétroviseur selon la revendication 7, **caractérisé par le fait que** la tête sphérique (59) comporte, en tant qu'arrêt rotatif, au moins un tenon radial (61, 62) guidé dans une fente de guidage (54, 55) de la cuvette sphérique pourvue d'un orifice d'emboîtement.

9. Rétroviseur selon la revendication 7 ou 8, **caractérisé par le fait que** la cuvette sphérique (50, 51) offre un bord tronconique (58) dans la région de son orifice d'emboîtement.

10. Rétroviseur selon la revendication 1 ou 6, **caractérisé par le fait que** les filetages femelles (30), avec lesquels les broches filetées (41) sont en prise, sont situés dans des corps sphériques (29) dotés de tenons radiaux (31) et montés, dans le bras de réglage (10), avec mobilité pivotante, mais sans mobilité rotatoire.

11. Rétroviseur selon la revendication 10, **caractérisé par le fait que** le bras de réglage (10) est muni, en vue de la réception pivotante des corps sphériques (29), de cuvettes sphériques (25, 26) respectivement dotées d'ouvertures de part et d'autre, en direction des broches filetées (41), et respectivement pourvues de fentes de guidage (27, 28) dédiées aux tenons radiaux (31) desdits corps sphériques (29).

12. Rétroviseur selon la revendication 11, **caractérisé par le fait que** les ouvertures (35, 36) des cuvettes sphériques (25, 26) sont respectivement munies de bords tronconiques (37, 38).

13. Rétroviseur selon la revendication 11 ou 12, **caractérisé par le fait que** les cuvettes sphériques (25, 26) sont agencées avec un décalage radial relatif entre eux dans le bras de réglage (10).

14. Rétroviseur selon la revendication 13, **caractérisé par le fait que** les cuvettes sphériques (50, 51), recevant les têtes sphériques (59) des pièces (60) de retenue des moteurs, sont disposées dans des plans (65, 66) dont les espacements radiaux (a, a1), vis-à-vis du centre (M) de l'articulation sphérique (9, 11), correspondent aux espacements radiaux des cuvettes sphériques (25, 26) situées dans le bras de réglage (10).

15. Rétroviseur selon la revendication 1, **caractérisé par le fait que** l'écuelle (11) d'articulation sphérique est respectivement dotée, côté miroir et côté intérieur du boîtier, d'un orifice (17, 18) présentant un bord tronconique (19).

16. Rétroviseur selon la revendication 1 ou 15, **caractérisé par le fait que** l'écuelle (11) d'articulation sphérique est interrompue par deux fentes radiales (45, 46) situées dans les plans radiaux (47, 48) des deux cuvettes sphériques (50, 51) dans lesquels les moteurs électriques (4, 5) sont montés.

17. Rétroviseur selon la revendication 14, **caractérisé par le fait que** l'écuelle (11) d'articulation sphérique est munie de fentes radiales écartables (20, 21) dans la région d'au moins une membrure radiale (13, 14) portant ladite écuelle.

18. Rétroviseur selon la revendication 2 ou 16, **caractérisé par le fait que** les fentes radiales (13, 14), portant l'écuelle (11) d'articulation sphérique, sont interposées entre les fentes radiales (45, 46).

19. Rétroviseur selon l'une des revendications 1 à 18, **caractérisé par le fait que** le boîtier de miroir (3) et le porte-miroir (2) consistent en une matière plastique à stabilité de forme.

20. Rétroviseur selon l'une des revendications 1 à 19, **caractérisé par le fait que** les corps sphériques (29) sont respectivement façonnés d'un seul tenant, en matière plastique, avec leurs tenons radiaux (31).

21. Rétroviseur selon la revendication 2 ou 3, **caractérisé par le fait que** le boîtier de miroir (3) présente des discontinuités, des évidements (16) et/ou des perforations dans le corps de sa coque.

22. Rétroviseur selon l'une des revendications 1 à 3, **caractérisé par le fait que** les broches filetées (41) sont respectivement en liaison, par l'intermédiaire d'accouplements articulés, avec les arbres de sortie des moteurs électriques ou avec les engrenages démultiplicateurs de ces derniers.
